# EUROPEAN PATENT APPLICATION

(11) **EP 4 428 163 A1**
(43) Date of publication of application: **11.09.2024**
(21) Application number: 22886928.5
(22) Date of filing: 24.10.2022
(51) Int. Cl.: C08F 2/44

(54) **ANAEROBIC CURABLE COMPOSITION**

(30) Priority: 01.11.2021 JP 2021178540
(71) Applicant: ThreeBond Co., Ltd., Tokyo 192-0398 (JP)
(72) Inventor: KANEKO, Satoshi, Hachioji-shi, Tokyo 192-0398 (JP)
(74) Representative: Crow, Martin
(86) International application number: PCT/JP2022/039447
(87) International publication number: WO 2023/074601

(57) **Abstract**

Conventionally, for anaerobically curable compositions that were used in assembly of a stacked steel sheet, fast curability was required for the efficiency of productivity. Recently, diversification of assembly methods has made not only curing acceleration by a primer but also curing acceleration by heating possible. In order for improvement in durability of stacked steel sheets, there has been a demand for improvement in shear adhesive strength and peeling adhesive strength of anaerobically curable compositions. The present invention relates to an anaerobically curable composition containing the following components (A) to (D): component (A): (meth)acryloyl compound, component (B): hydroperoxide, component (C): saccharin, and component (D): sodium salt, potassium salt or calcium salt of saccharin.

## Description

### TECHNICAL FIELD

The present invention relates to an anaerobically curable composition.

### BACKGROUND ART

At the moment, motors are in a wide variety of uses such as driving of mobile electronic terminals, adjustment of camera focus, driving of hard disks and driving of cars. Rotors or stators in motors are made by stacking electromagnetic steel plates. Upon assembly of a stacked steel plate, it is common to use a method in which steel plates are caulked or assembled by laser welding. Recently, in association with increase in the output of motors, thickness reduction of electromagnetic steel plates has been in progress, conventional methods can no longer be used, and assembly methods by adhesion using an adhesive has been drawing attention. As such a method, a method in which curing is performed at room temperature as described in Japanese Patent Laid-Open No. 2006-334648 has been known, and studies have been also underway regarding a method in which curing is accelerated by induction heating.

### SUMMARY OF INVENTION

Conventionally, for anaerobically curable compositions used in the assembly of a stacked steel plate, fast curability has been required for the efficiency of productivity; however, recently, diversification of assembly methods has made not only curing acceleration by a primer but also curing acceleration by heating possible. In order for improvement in durability of stacked steel plate, there has been a demand for improvement in shear adhesive strength and peeling adhesive strength of anaerobically curable compositions.

As a result of intensive studies for achieving the above-described objective, the present inventor has found a technique regarding an aerobic curable composition using a (meth)acryloyl compound that contributes to improvement in shear adhesive strength and peeling adhesive strength, to complete the present invention. (Hereinafter, an acryloyl group and a methacryloyl group will also be collectively referred to as a (meth)acryloyl group, and a compound having a (meth) acryloyl group will also be referred to as a (meth)acryloyl compound or a (meth)acrylate.)

The gist of the present invention will be described below. A first embodiment of the present invention is an anaerobically curable composition containing the following components (A) to (D).
Component (A): (Meth)acryloyl compound
Component (B): Hydroperoxide
Component (C): Saccharin
Component (D): Sodium salt, potassium salt or calcium salt of saccharin

A second embodiment of the present invention is the anaerobically curable composition according to the first embodiment further containing an adhesion imparting agent as a component (E), in which the adhesion imparting agent contains a compound having a (meth)acryloyl group, particularly, an acryloyl group, and a hydrolysable silyl group, in its molecule (excluding the component (A)).

A third embodiment of the present invention is the anaerobically curable composition according to the second embodiment further containing a (meth)acryloyl monomer having a phosphoric acid ester skeleton (excluding the component (A)) in the component (E).

A fourth embodiment of the present invention is the anaerobically curable composition according to any one of the first to third embodiments containing 10 to 50 mass% of a monofunctional (meth)acryloyl compound having a hydroxyl group in its molecule with respect to a total of the component (A) .

A fifth embodiment of the present invention is the anaerobically curable composition according to any one of the first to fourth embodiments containing an epoxy-modified (meth) acrylate oligomer or a (meth) acrylate oligomer having a bisphenol skeleton and a urethane-modified (meth)acrylate oligomer as the component (A).

A sixth embodiment of the present invention is the anaerobically curable composition according to any one of the first to fifth embodiments that is used in assembly of a stacked steel plate.

A seventh embodiment of the present invention is a method for curing the anaerobically curable composition according to any one of the first to sixth embodiments, in which curing acceleration by heating is performed at the same time as anaerobic curing or after anaerobic curing.

A first aspect of the present invention relates to an anaerobically curable composition containing the following components (A) to (D):
Component (A): (Meth)acryloyl compound
Component (B): Hydroperoxide
Component (C): Saccharin
Component (D): Sodium salt, potassium salt or calcium salt of saccharin.

According to the anaerobically curable composition having the above-described configuration, it is possible to realize an anaerobically curable composition having a high shear adhesive strength and a high peeling adhesive strength when subjected to not only curing acceleration with a primer but also curing acceleration by heating.

In the present description, the anaerobically curable composition will also be simply referred to as "composition" or "composition according to the present invention."

Hereinafter, preferable embodiments of the present invention will be described. The present invention is not limited only to the following embodiments and can be modified in a variety of manners within the scope of the claims. The embodiments to be described in the present description can be arbitrarily combined together to produce a different embodiment.

Throughout the description, unless particularly stated otherwise, any expression in a singular form should be understood to encompass the concept of its plural form. Therefore, unless particularly stated otherwise, the article specifying a single form (for example, "a", "an", "the", and the like in the case of English language) should be understood to encompass the concept of its plural form. Further, unless particularly stated otherwise, any term used in the present description should be understood as a term that is used to have the meaning conventionally used in the relevant technical field. Therefore, unless defined otherwise, all the technical terms and scientific terms used in the present description have the same meaning as generally understood by a person ordinarily skilled in the art to which the present invention is pertained. If there is any conflict in meaning, the present description (including the definitions) takes priority.

In the present description, the term "(meth)acrylic" includes both acrylic and methacrylic. Therefore, for example, the term "(meth) acrylic acid" includes both acrylic acid and methacrylic acid. Similarly, the term "(meth)acryloyl" includes both acryloyl and methacryloyl. Therefore, the term "(meth) acryloyl group" includes both an acryloyl group and a methacryloyl group.

In the present description, "A and/or B" means both A and B or any one of A or B.

The component (A) that can be used in the present invention is a (meth)acryloyl compound. The compound (A) ((meth)acryloyl compound) preferably contains a (meth)acrylate oligomer. Examples of the (meth)acrylate oligomer may include epoxy-modified (meth)acrylate oligomers, (meth)acrylate oligomers having a bisphenol skeleton, urethane-modified (meth)acrylate oligomers, oligomers having a main skeleton with a polymerized (meth) acryloyl monomer and having a (meth) acryloyl group at the end of the main skeleton, and the like. Particularly, from the viewpoint of improved adhesive strength, it is preferable to jointly use an epoxy-modified (meth)acrylate oligomer or a (meth)acrylate oligomer having a bisphenol skeleton and a urethane-modified (meth)acrylate oligomer, and it is more preferable to jointly use an epoxy-modified (meth)acrylate oligomer and a urethane-modified (meth)acrylate oligomer. That is, in a preferable embodiment of the present invention, the component (A) contains an epoxy-modified (meth)acrylate oligomer or a (meth)acrylate oligomer having a bisphenol skeleton and a urethane-modified (meth)acrylate oligomer. In a more preferable embodiment of the present invention, the component (A) contains an epoxy-modified (meth)acrylate oligomer and a urethane-modified (meth)acrylate oligomer. In a case where the component (A) ((meth) acryloyl compound) contains an epoxy-modified (meth)acrylate oligomer or a (meth)acrylate oligomer having a bisphenol skeleton and a urethane-modified (meth)acrylate oligomer, a mixing ratio between the epoxy-modified (meth)acrylate oligomer or the (meth) acrylate oligomer having a bisphenol skeleton and the urethane-modified (meth)acrylate oligomer is not particularly limited. A mass ratio between the epoxy-modified (meth)acrylate oligomer or the (meth) acrylate oligomer having a bisphenol skeleton and the urethane-modified (meth)acrylate oligomer (a mass ratio between a total amount of the epoxy-modified (meth) acrylate oligomer or the (meth)acrylate oligomer having a bisphenol skeleton and an amount of the urethane-modified (meth)acrylate oligomer) is preferably 30:70 to 70:30 and more preferably 30:70 to 50:50, in order to maintain high adhesive strength, in particular.

The component (A) preferably contains a (meth) acrylate oligomer having two to five (meth)acryloyl groups per molecule. A weight-average molecular weight of the (meth)acrylate oligomer as the component (A) is preferably 1,000 to 50,000, more preferably 1,000 to 40,000 and still more preferably 1,000 to 30,000. When the weight-average molecular weight is higher than 1000, the curability is favorable, and, when the weight-average molecular weight is lower than 50000, the viscosity is low, and familiarity in the interface at the time of being pasted to an adherend is favorable. Here, the weight-average molecular weight refers to a polystyrene-equivalent weight-average molecular weight measured by gel permeation chromatography.

Examples of the epoxy-modified (meth)acrylate oligomer may include epoxy-modified (meth)acryloyl oligomers obtained by adding a (meth) acrylic acid to a bisphenol A-type epoxy resin, a bisphenol F-type epoxy resin, a phenol novolac resin or the like, but not limited thereto. The epoxy-modified (meth)acrylate oligomer is also referred to as a vinyl ester resin.

Examples of the (meth)acrylate oligomer having a bisphenol skeleton may include oligomers obtained by adding a (meth)acrylic acid to a phenol group of bisphenol A or bisphenol F or a hydroxyl group of an alkylene oxide-modified polyol of bisphenol, but not limited thereto.

The urethane-modified (meth)acrylate oligomer can be synthesized from, for example, a reaction product of a polyol compound having two or more hydroxyl groups in its molecule (main skeleton), a compound having two or more isocyanate groups in its molecule and a (meth)acrylate containing at least one hydroxyl group in its molecule. Examples of the compound having two or more isocyanate groups in its molecule may include aromatic polyisocyanate, alicyclic polyisocyanate, aliphatic polyisocyanate and the like. Among these, aliphatic polyisocyanate and alicyclic polyisocyanate are preferable from the viewpoint of obtaining a flexible cured product. One of these may be used singly or a plurality thereof may be combined together and used.

Examples of the polyol compound having two or more hydroxyl groups in its molecule may include polyether polyol, polyester polyol, caprolactone diol, bisphenol polyol, polyisoprene polyol, hydrogenated polyisoprene polyol, polybutadiene polyol, hydrogenated polybutadiene polyol, castor oil polyol, polycarbonate diol and the like. Among these, polyether polyol, polycarbonate diol, polybutadiene polyol and hydrogenated polybutadiene polyol are preferable from the viewpoints of excellent transparency and excellent durability, and polyether polyol and polycarbonate diol are particularly preferable from the viewpoint of preventing a cured product from becoming white turbid in a high-temperature and high-humidity atmosphere. One of these may be used singly or a plurality thereof may be combined together and used.

As the compound having two or more isocyanate groups in its molecule, there may be aromatic polyisocyanate and aliphatic polyisocyanate. Examples of the aromatic polyisocyanate may include 2,4-tolylene diisocyanate, 2,6-tolylene diisocyanate, 1,3-xylylene diisocyanate, 1,4-xylylene diisocyanate, tetramethylxylylene diisocyanate, diphenylmethane diisocyanate, naphthalene-1,5-diisocyanate, triphenylmethane triisocyanate and the like. Examples of the alicyclic polyisocyanate may include isophorone diisocyanate, bis(4-isocyanatocyclohexyl)methane, 1,3-bis(isocyanatomethyl)cyclohexane, 1,4-bis(isocyanatomethyl)cyclohexane, norbornane diisocyanate, bicycloheptane triisocyanate and the like. Examples of the aliphatic polyisocyanate may include hexamethylene diisocyanate, 1,3,6-hexamethylene triisocyanate, 1,6,11-undecane triisocyanate and the like. Among these, diisocyanates such as isophorone diisocyanate and hexamethylene diisocyanate are preferable.

Examples of the (meth)acrylate containing at least one hydroxyl group in its molecule may include mono(meth)acrylates of a monohydric alcohol such as 2-hydroxyethyl (meth)acrylate or 2-hydroxypropyl (meth) acrylate or a dihydric alcohol such as ethylene glycol, propylene glycol, 1,3-propanediol, 1,3-butanediol, 1,4-butanediol or polyethylene glycol, mono(meth)acrylates or di(meth)acrylates of a trihydric alcohol such as trimethylolethane, trimethylolpropane or glycerin and the like. Among these, mono(meth)acrylates of a dihydric alcohol are preferable, and mono (meth) acrylates of ethylene glycol are more preferable, from the viewpoint of obtaining a cured product having excellent flexibility. One of these may be used singly or a plurality thereof may be combined together and used.

A method for synthesizing the urethane-modified (meth)acrylate oligomer is not particularly limited, and a well-known method can be used. Examples thereof may include a method in which a polyol compound having two or more hydroxyl groups in its molecule and an isocyanate compound having two or more isocyanate groups in its molecule are reacted together in a diluent (for example, methyl ethyl ketone, methoxyphenol or the like) at a ratio in terms of mole ratio (the polyol compound : the isocyanate compound) of preferably 3:1 to 1:3 and more preferably 2:1 to 1:2 to obtain a urethane prepolymer; and then, the isocyanate groups remaining in the obtained urethane prepolymer and a (meth) acrylate containing at least one hydroxyl group in its molecule in an amount large enough to react with the isocyanate groups are reacted together to synthesize a urethane-modified (meth)acrylate oligomer.

Examples of a catalyst that can be used during the synthesis may include lead oleate, tetrabutyltin, antimony trichloride, triphenylaluminum, trioctylaluminum, dibutyltin dilaurate, copper naphthenate, zinc naphthenate, zinc octylate, zinc octenoate, zirconium naphthenate, cobalt naphthenate, tetra-n-butyl-1,3-diacetyloxydistanoxane, triethylamine, 1,4-diaza[2,2,2]bicyclooctane, N-ethylmorpholine and the like. Among these, dibutyltin dilaurate, zinc naphthenate, zinc octylate and zinc octanoate are preferably used since the activity is high and a cured product having excellent transparency can be obtained. An amount of the catalyst used is preferably 0.0001 to 10 parts by mass with respect to 100 parts by mass of a total amount of the reactants. In addition, a reaction temperature is normally 10°C to 100°C and particularly preferably 30°C to 90°C. The urethane-modified (meth) acrylate oligomer may be used in a state of being diluted with a solvent or the following monomer in the raw material stage. Particularly, a urethane-modified (meth)acrylate oligomer having a weight-average molecular weight (Mw) of 10,000 to 30,000 and having two or more (meth)acrylic groups in its molecule is preferably used.

Alternatively, as the urethane-modified (meth)acrylate oligomer, a commercially available product may also be used. As the commercially available product, UV-curable urethane acrylates SHIKOH^{™} series (manufactured by Mitsubishi Chemical Corporation), EBECRYL series (manufactured by Daicel-Allnex Ltd.), urethane acrylates (manufactured by Kyoeisha Chemical Co., Ltd.) and the like can be used.

To the component (A), aside from the (meth)acrylate oligomer, a monomer having a (meth)acryloyl group is preferably added. A molecular weight of the monomer having a (meth)acryloyl group is preferably 400 or less when the diluting capability is taken into account. Examples of the monomer having a (meth)acryloyl group may include monofunctional, difunctional, trifunctional, and polyfunctional of tetrafunctional or higher-functional monomers. (Meth)acrylate monomers are preferable, and monofunctional or difunctional (meth)acrylate monomers are particularly preferable. A molecular weight of the monomer having a (meth)acryloyl group is preferably 1,000 or less to decrease viscosity of the composition.

Examples of the monofunctional monomer may include lauryl (meth)acrylate, stearyl (meth)acrylate, tetrahydrofurfuryl (meth)acrylate, caprolactone-modified tetrahydrofurfuryl (meth)acrylate, cyclohexyl (meth)acrylate, dicyclopentanyl (meth)acrylate, isobornyl (meth)acrylate, benzyl (meth)acrylate, phenyl (meth)acrylate, phenoxyethyl (meth)acrylate, phenoxydiethylene glycol (meth)acrylate, phenoxytetraethylene glycol (meth)acrylate, nonylphenoxyethyl (meth)acrylate, butoxyethyl (meth)acrylate, 2-hydroxyethyl (meth)acrylate ((meth)acrylic acid 2-hydroxyethyl), 2-hydroxypropyl (meth)acrylate, glycerol (meth)acrylate, modified butyl (meth)acrylate, epichlorohydrin-modified phenoxy (meth)acrylate, 2-hydroxy-3-phenoxypropyl (meth)acrylate, N,N-dimethylaminoethyl (meth)acrylate, N,N-diethylaminoethyl (meth)acrylate, morpholino (meth)acrylate and the like. Among these, isobornyl (meth)acrylate, 2-hydroxyethyl (meth)acrylate and 2-hydroxy-3-phenoxypropyl (meth)acrylate are preferably used, and isobornyl methacrylate, 2-hydroxyethyl methacrylate, 2-hydroxy-3-phenoxypropyl acrylate are more preferably used.

Examples of the difunctional monomer may include neopentyl glycol di(meth)acrylate, bisphenol A di(meth)acrylate, epichlorohydrin-modified bisphenol A di(meth)acrylate, stearic acid-modified pentaerythritol di(meth)acrylate, dicyclopentenyl diacrylate, di(meth)acryloyl isocyanurate, tricyclodecane dimethanol di(meth)acrylate and the like. Among these, tricyclodecane dimethanol di(meth)acrylate is preferably used, and tricyclodecane dimethanol dimethacrylate is more preferably used.

Examples of the trifunctional monomer may include trimethylolpropane tri(meth)acrylate, pentaerythritol tri(meth)acrylate, epichlorohydrin-modified trimethylolpropane tri(meth)acrylate, epichlorohydrin-modified glycerol tri(meth)acrylate, tris(acryloyloxyethyl) isocyanurate and the like.

Examples of the polyfunctional monomer may include ditrimethylolpropane tetra(meth)acrylate, pentaerythritol tetra(meth)acrylate, dipentaerythritol monohydroxypenta(meth)acrylate, alkyl-modified dipentaerythritol penta(meth)acrylate, dipentaerythritol hexa(meth)acrylate and the like. Among these, dipentaerythritol hexa(meth)acrylate is preferably used, and dipentaerythritol hexaacrylate is more preferably used.

These monomers can be used singly or two or more thereof can be mixed together and used.

Among these, the component (A) preferably contains the monofunctional monomer in addition to the (meth)acrylate oligomer. The component (A) particularly preferably contains a monofunctional monomer having a hydroxyl group in its molecule. In addition, the component (A) is preferably composed only of the (meth) acrylate oligomer and the monofunctional monomer (a mixture of the (meth) acrylate oligomer and the monofunctional monomer), more preferably composed only of the epoxy-modified (meth)acrylate oligomer or the (meth)acrylate oligomer having a bisphenol skeleton and the urethane-modified (meth)acrylate oligomer ((meth)acrylate oligomer) and the monofunctional monomer, and particularly preferably composed only of the epoxy-modified (meth)acrylate oligomer and the urethane-modified (meth)acrylate oligomer ((meth)acrylate oligomer) and the monofunctional monomer.

A content of the component (A) in the composition is, for example, 85 to 99 mass%, preferably 90 to 98 mass%, and more preferably 92 to 97 mass%, with respect to the total amount of the composition. In a case where the composition contains two or more components (A), the content is the total content of the components (A).

In a case where the composition contains the (meth)acrylate oligomer as the component (A), a content of the (meth)acrylate oligomer in the component (A) is, for example, 35 to 65 mass%, preferably 40 to 55 mass%, more preferably 43 to 51 mass%, and particularly preferably 43.0 mass% or more and less than 46.0 mass%, with respect to the total of the component (A).

In a case where the composition contains the monomer having a (meth)acryloyl group as the component (A), a component (A) preferably contains 45 to 65 mass% and more preferably contains 50 to 60 mass% of the monomer having a (meth)acryloyl group, with respect to the total of the component (A).

In a case where the composition contains the (meth)acrylate oligomer and the monomer having a (meth)acryloyl group as the component (A), a mixing ratio between the (meth)acrylate oligomer and the monomer having a (meth) acryloyl group is such that a proportion of the (meth) acrylate oligomer is, for example, 65 to 120 parts by mass, preferably 70 to 105 parts by mass, more preferably 75 to 102 parts by mass, and still more preferably 75 parts by mass or more and less than 100 parts by mass, with respect to 100 parts by mass of the monomer having a (meth) acryloyl group.

In a case where the composition contains a monofunctional (meth)acryloyl compound having a hydroxyl group in its molecule as the component (A), the component (A) preferably contains 10 to 50 mass%, more preferably contains 20 to 50 mass%, still more preferably contains 33 to 45 mass%, and particularly preferably contains 33.5 mass% to 41.0 mass% of the monofunctional (meth)acryloyl compound having a hydroxyl group in its molecule, with respect to the total of the component (A). The monofunctional (meth)acryloyl compound having a hydroxyl group in its molecule may include 2-hydroxyethyl (meth)acrylate (methacrylic acid 2-hydroxyethyl), 2-hydroxypropyl (meth)acrylate, 2-hydroxy-3-phenoxypropyl (meth)acrylate or the like, and these can be used singly or two or more thereof can be jointly used. This makes it possible to maintain both the shear adhesive strength and the peeling adhesive strength.

The component (B) that can be used in the present invention is an organic peroxide. A hydroperoxide is particularly preferable. The hydroperoxide is an organic peroxide having a structure as shown in the following general formula 1, and R¹ in this formula indicates a group derived from a linear aliphatic hydrocarbon, a cyclic aliphatic hydrocarbon, an aromatic hydrocarbon or a derivative thereof. Specific examples thereof may include p-menthane hydroperoxide, diisopropylbenzene hydroperoxide, 1,1,3,3-tetramethylbutyl hydroperoxide, cumene hydroperoxide, t-butyl hydroperoxide and the like, but not limited thereto. Examples of a product name thereof may include PERCUMYL H-80 manufactured by NOF Corporation and the like but not limited thereto.

### [Formula 1]

R¹-O-O-H ··· General formula 1

The component (B) is added in a proportion of preferably 0.1 to 5.0 parts by mass, more preferably 0.5 to 1.5 parts by mass, and still more preferably 0. 6 to 1.0 parts by mass, with respect to 100 parts by mass of the component (A). When it is 0.1 parts by mass or more, curability can be attained, and, when it is 5.0 parts by mass or less, it is possible to maintain storage stability. Alternatively, a content of the component (B) in the composition is, for example, 0.1 to 2.0 mass%, preferably 0.5 to 1.5 mass%, and more preferably 0.8 to 1.0 mass%, with respect to the total amount of the composition. In a case where the composition contains two or more components (B), the content is the total content of the components (B).

The component (C) that can be used in the present invention is saccharin which is an anaerobic curable catalyst. The component (C) is water-insoluble. In an anaerobic state where the component (C) does not come into contact with oxygen, a metal ion of an adherend and the component (C) react with each other to decompose the component (C), which will be described below, to generate a free radical. Particularly, the component (C) is preferably saccharin as shown in the following formula 2.

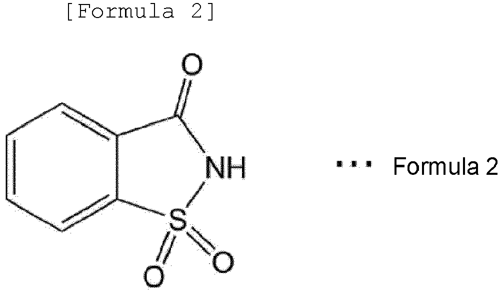

The component (C) is added in a proportion of preferably 0.1 to 5.0 parts by mass, more preferably 0.1 to 2.0 parts by mass, still more preferably 0.8 parts by mass or more and less than 2.0 parts by mass, and particularly preferably 1.2 to 1.6 parts by mass, with respect to 100 parts by mass of the component (A). When it is 0.1 part by mass or more, anaerobic curability can be attained, and, when it is 5.0 parts by mass or less, it is possible to maintain storage stability. Alternatively, a content of the component (C) in the composition is, for example, 0.5 to 3.0 mass%, preferably 1.0 to 2.0 mass%, and more preferably 1.2 to 1.5 mass%, with respect to the total amount of the composition. In a case where the composition contains two or more components (C), the content is the total content of the components (C).

The component (D) that can be used in the present invention is a sodium salt, potassium salt or calcium salt of saccharin, and specifically indicates a structure as shown in a general formula 3. Here, M is sodium, potassium or calcium, and n is 1 or 2. It is preferable that M be sodium and n is 1 (that is, the component (D) = o-sulfobenzimide sodium salt). The component (D) may be a hydrate form. Since the component (D) is water-soluble and thus poorly soluble in the component (A) or the like that are water-insoluble, the component (D) is preferably dissolved by a compound having a hydroxyl group such as the monofunctional (meth)acryloyl compound having a hydroxyl group in its molecule, and then added to the composition, and a solid content concentration of the component (D) in the compound having a hydroxyl group such as a monofunctional monomer is preferably 0.1 to 5 mass% and more preferably 0.5 to 1 mass%.

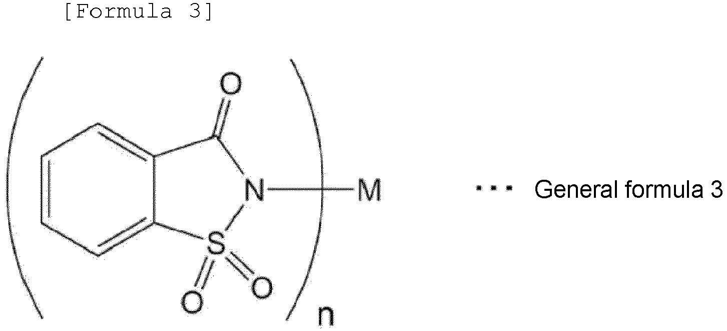

0.001 to 5.0 parts by mass of the component (D) is preferably added to 100 parts by mass of the component (A), a more preferable amount added is 0.01 to 4.0 parts by mass, and a more preferable amount added is 0.1 to 3.0 parts by mass. When it is 0.001 parts by mass or more, adhesive strength after after-baking can improve, and, when it is 5.0 parts by mass or less, it is possible to maintain storage stability. Alternatively, a content of the component (D) in the composition is, for example, 0.005 to 1.0 mass% and preferably 0.01 to 0.5 mass%, with respect to the total amount of the composition. In a case where the composition contains two or more components (D), the content is the total content of the components (D).

The composition according to the present invention essentially contains the component (A), the component (B), the component (C) and the component (D), and may contain another component in addition to these components. The another component may be an adhesion imparting agent (component (E)). Here, the component (E) that can be used in the present invention is an adhesion imparting agent, and a (meth)acryloyl monomer having a phosphate ester skeleton, a silane-based coupling agent or the like is applicable. Particularly, the (meth)acryloyl monomer having a phosphate ester skeleton is a monomer having a (meth)acryloyl group, but is not the component (A) since the influence of phosphate ester is strong, and is handled as an adhesion imparting agent. A (meth)acryloyl monomer of a general formula 4 is particularly preferable. In the general formula 4, m is 1 or 2, R² indicates hydrogen or a methyl group, R³ indicates a hydrocarbon group having 1 to 5 carbon atoms and may include, for example, a linear or branched alkylene group such as a methylene group, an ethylene group, a trimethylene group, a propylene group, a tetramethylene group or a pentamethylene group. Among these, R³ preferably represents an alkylene group having 1 to 3 carbon atoms and more preferably an ethylene group. In a case where m is 2, each R³ may be the same as or different from each other. Specific examples of the (meth) acryloyl monomer having a phosphate ester skeleton may include 2-hydroxyethyl (meth) acrylate acid phosphate and the like, but not limited thereto. Examples of a product thereof may include JPA-514 manufactured by Johoku Chemical Co., Ltd. and the like. The (meth)acryloyl monomer having a phosphate ester skeleton may be used singly or two or more thereof may be jointly used.

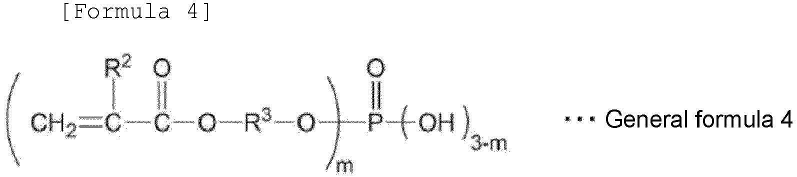

Furthermore, it is preferable to jointly use a silane-based coupling agent with the (meth)acryloyl monomer having a phosphate ester skeleton, and a mass ratio (a mass ratio between the (meth) acryloyl monomer having a phosphate ester skeleton : the silane coupling agent) is 10:90 to 90:10, preferably 15:85 to 50:50 and more preferably 20:80 to 30:70. The silane-based coupling agent is particularly preferably a compound having a (meth) acryloyl group and a hydrolysable silyl group in its molecule and is specifically a silane-based coupling agent shown in a general formula 5. Here, p is 0 or 1 and preferably 0. R² indicates a hydrogen atom or a methyl group and is preferably a hydrogen atom. R³ indicates a divalent hydrocarbon group having 1 to 5 carbon atoms, preferably indicates a linear or branched alkylene group having 1 to 5 carbon atoms, more preferably indicates a methyl group, an ethyl group, a trimethylene group or a propylene group and particularly preferably indicates a trimethylene group. R⁴ indicates a methyl group or an ethyl group and preferably indicates a methyl group. A compound having an acryloyl group and a hydrolysable silyl group in its molecule for which R² is hydrogen is particularly preferable. That is, in a preferable embodiment of the present invention, the composition contains a compound having an acryloyl group and a hydrolysable silyl group in its molecule (excluding the component (A)) and a (meth)acryloyl monomer having a phosphate ester skeleton (excluding the component (A)) as the component (E) (adhesion imparting agent). Although the compound having a (meth)acryloyl group and a hydrolysable silyl group has a (meth) acryloyl group, it is not the component (A) since the influence of the hydrolysable silyl group is strong, and is handled as an adhesion imparting agent. Specific examples of the compound having a (meth)acryloyl group and a hydrolysable silyl group may include 3-(meth)acryloxypropyltrimethoxysilane and the like, but not limited thereto. Examples of a product name thereof may include KBM-503 and KBM-5103 manufactured by Shin-Etsu Chemical Co., Ltd. and the like, but not limited thereto. The silane-based coupling agent (particularly, the compound having a (meth) acryloyl group and a hydrolysable silyl group in its molecule) may be used singly or two or more thereof may be jointly used.

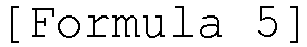

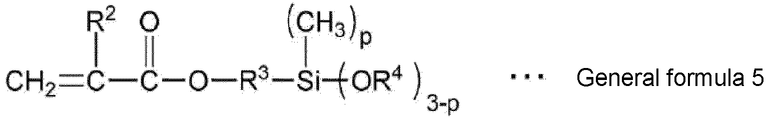

Preferably, the adhesion imparting agent as the component (E) contains at least one of the compound having an acryloyl group and a hydrolysable silyl group in its molecule and the (meth)acryloyl monomer having a phosphate ester skeleton. The adhesion imparting agent does not overlap the component (A). That is, in a preferable embodiment of the present invention, the composition according to the present invention further contains an adhesion imparting agent as the component (E), and the adhesion imparting agent contains a compound having an acryloyl group and a hydrolysable silyl group in its molecule (excluding the component (A)). In a preferable embodiment of the present invention, the composition according to the present invention further contains an adhesion imparting agent as the component (E), and the adhesion imparting agent contains a (meth)acryloyl monomer having a phosphate ester skeleton (excluding the component (A) . In a more preferable embodiment of the present invention, the composition according to the present invention further contains an adhesion imparting agent as the component (E), and the adhesion imparting agent contains a compound having an acryloyl group and a hydrolysable silyl group in its molecule (excluding the component (A)) and a (meth)acryloyl monomer having a phosphate ester skeleton (excluding the component (A)). In a particularly preferable embodiment of the present invention, the composition according to the present invention further contains an adhesion imparting agent as the component (E), and the adhesion imparting agent is a mixture of a compound having an acryloyl group and a hydrolysable silyl group in the molecule (excluding the component (A)) and a (meth)acryloyl monomer having a phosphate ester skeleton (excluding the component (A)).

In a case where the composition contains an adhesion imparting agent as the component (E), a content of the component (E) in the composition is, for example, 0.05 to 5.0 mass% and preferably 0.1 to 1.0 mass%, with respect to the total amount of the composition. Alternatively, a content of the component (E) is preferably 0.01 to 3.0 parts by mass, more preferably 0.1 to 2.0 parts by mass and particularly preferably more than 0.17 parts by mass and less than 1.0 parts by mass, with respect to 100 parts by mass of the component (A). In a case where the composition contains two or more components (E), the content is the total content of the components (E).

An additive(s) such as a curing accelerator, an inorganic filler and an organic filler, a photoinitiator, a polymerization inhibitor, a chelating agent, an anti-aging agent, a plasticizer, a physical property modifier and a light stabilizer may be blended to adjust the characteristics to an extent that the physical properties of the present invention are not impaired. The composition preferably does not contain any solvents in the adhesion use.

In the present invention, it is possible to add a curing accelerator as a compound that accelerates reactions. Specific examples thereof may include tertiary amines such as N,N-dimethylaniline, N,N-dimethyl-P-toluidine, diisopropanol-P-toluidine and triethylamine; polyamines such as diethylenetriamine, triethylenetetramine and pentaethylenehexamine; thioureas such as thiourea, ethylenethiourea, benzoylthiourea, acetylthiourea and tetramethylthiourea, additionally, benzothiazole or 1-dodecanethiol and the like, but not limited thereto.

In a case where the composition contains a curing accelerator, a content of the curing accelerator in the composition is, for example, 0.05 to 5.0 mass% and preferably 0.5 to 2.0 mass%, with respect to the total amount of the composition. Alternatively, a content of the curing accelerator is preferably 0.01 to 3.0 parts by mass and more preferably 0.6 to 1.5 parts by mass, with respect to 100 parts by mass of the component (A) . In a case where the composition contains two or more curing accelerators, the content is the total content of the curing accelerators.

In the present invention, it is possible to add an inorganic filler for the purpose of adjusting the viscosity. Particularly, fumed silica is preferable. Examples thereof may include a hydrophilic type having silanol remaining on an untreated surface, a hydrophobic type having a silica surface hydrophobilized by treating the silanol with dimethyldichlorosilane or the like, silica surface-treated with octamethylcyclotetrasiloxane, polydimethylsiloxane, octylsilane, hexamethyldisilazane, hexadecylsilane or methacrylsilane and the like, but not limited thereto. Examples of the specific commercially available products of the hydrophilic type may include AEROSIL 90, 130, 150, 200, 255, 300 and 380 manufactured by Nippon Aerosil Co., Ltd. and the like. Examples of the specific commercially available products of the hydrophobic type may include AEROSIL R972 (dimethyldichlorosilane-treated), R974 (dimethyldichlorosilane-treated), R104 (octamethylcyclotetrasiloxane-treated), R106 (octamethylcyclotetrasiloxane-treated), R202 (polydimethylsiloxane-treated), R805 (octylsilane-treated), R812 (hexamethyldisilazane-treated), R816 (hexadecylsilane-treated), R711 (methacrylsilane-treated) manufactured by Nippon Aerosil Co., Ltd. and the like. Additionally, examples thereof may include CAB-O-SIL series, which is fumed silica from Cabot Corporation, for example, CAB-O-SIL TS720 (polydimethylsiloxane-treated) and the like.

In a case where the composition contains the inorganic filler, a content of the inorganic filler in the composition is, for example, 1 to 10 mass% and preferably 3 to 5 mass%, with respect to the total amount of the composition. Alternatively, a content of the inorganic filler is preferably 0.01 to 3.0 parts by mass and more preferably 3 to 5 parts by mass, with respect to 100 parts by mass of the component (A) . In a case where the composition contains two or more inorganic fillers, the content is the total content of the inorganic fillers.

In the present invention, it is possible to add a polymerization inhibitor as a stabilizer to further suppress a viscosity change over time. Specific examples thereof may include 2,6-di-t-butyl-4-methylphenol (BHT), hydroquinone, hydroquinone monomethyl ether, 4-t-butylcatechol and the like, but not limited thereto.

In a case where the composition contains the polymerization inhibitor, a content of the polymerization inhibitor in the composition is, for example, 0.01 to 0.2 mass% and preferably 0.02 to 0.10 mass%, with respect to the total amount of the composition. Alternatively, a content of the polymerization inhibitor is preferably 0.01 to 0.2 parts by mass and more preferably 0.02 to 0.10 parts by mass, with respect to 100 parts by mass of the component (A) . In a case where the composition contains two or more polymerization inhibitors, the content is the total content of the polymerization inhibitors.

In the present invention, a photoinitiator may be added to impart photocurability. Specific examples thereof may include acetophenone, propiophenone, benzophenone, xanthol, fluorein, benzaldehyde, anthraquinone, triphenylamine, carbazole, 3-methylacetophenone, 4-methylacetophenone, 3-pentylacetophenone, 4-methoxyacetophenone, 3-bromoacetophenone, 2,2-diethoxyacetophenone, p-diacetylbenzene, 3-methoxybenzophenone, 2,4,6-trimethylbenzophenone, oligo(2-hydroxy-2-methyl-1-(4-(1-methylvinyl)phenyl)prop anone), 4-allylacetophenone, camphorquinone, 2,4,6-trimethylbenzoyldiphenylphosphine oxide, 4-methylbenzophenone, 4-chloro-4'-benzylbenzophenone, 2-hydroxy-2-methyl-1-phenyl-1-propanone, 3-chloroxanthone, 3,9-dichloroxanthone, 3-chloro-8-nonylxanthone, benzoyl, benzoyl methyl ether, benzoin butyl ether, bis(4-dimethylaminophenyl) ketone, benzyl methoxy ketal, 2-chlorothioxanthone, o-methylbenzoate, benzyl dimethyl ketal, methyl benzoyl formate and the like, but not limited thereto.

In a case where the composition contains the photoinitiator, a content of the photoinitiator in the composition is, for example, 0.1 to 10 mass% and preferably 0.5 to 5 mass%, with respect to the total amount of the composition. In a case where the composition contains two or more photoinitiators, the content is the total content of the photoinitiators.

In the present invention, it is possible to use a chelating agent as a stabilizer to trap a remaining metal ion. Examples of a commercially available product thereof may include EDTA·2Na, EDTA·4Na and the like manufactured by Dojindo Molecular Technologies, Inc., EDTA-based (ethylenediaminetetraacetic acid) compounds, NTA-based (nitrilotetraacetic acid) compounds, DTPA-based (diethylenetriaminepentaacetic acid) compounds, HEDTA-based (hydroxyethylethylenediaminetriacetic acid) compounds, TTHA-based (triethylenetetraminehexaacetic acid) compounds, PDTA-based (1,3-propanediaminetetraacetic acid) compounds, DPTA-OH-based (1,3-diamino-2-hydroxypropanetetraacetic acid) compounds, HIDA-based (hydroxyethyliminodiacetic acid) compounds, DHEG-based (dihydroxyethylglycine) compounds, GEDTA-based (glycol ether diaminetetraacetic acid) compounds, CMGA-based (dialboxymethylglutamic acid) compounds, EDDS-based ((S,S)-ethylenediaminedisuccinic acid) compounds and EDTMP-based (ethylenediaminetetra(methylenephosphonic acid)) compounds manufactured by Chelest Corporation and the like, but not limited thereto. In addition, specific examples of a chelating agent that is a liquid phase at 25°C may include MZ-8, HEDP-based (1-hydroxyethane-1,1-diphosphonic acid) compounds, NTMP-based (nitrilotris(methylenephosphonic acid)) compounds and PBTC-based (2-phosphono-1,2,4-butanetricarboxylic acid) compounds manufactured by Chelest Corporation and the like, but not limited thereto.

In a case where the composition contains the chelating agent as a stabilizer, a content of the chelating agent in the composition is, for example, 0.01 to 1 mass% and preferably 0.05 to 0.5 mass%, with respect to the total amount of the composition. Alternatively, a content of the chelating agent is preferably 0.01 to 1 part by mass and more preferably 0.02 to 0.10 parts by mass, with respect to 100 parts by mass of the component (A). In a case where the composition contains two or more chelating agents, the above-described content is the total content of the chelating agents.

Among these, the composition according to the present invention preferably contains, in addition to the components (A) to (E), the curing accelerator, the polymerization inhibitor and the chelating agent. The composition according to the present invention is more preferably substantially composed of the components (A) to (E), the curing accelerator, the polymerization inhibitor and the chelating agent. The composition according to the present invention is particularly preferably composed only of the components (A) to (E), the curing accelerator, the polymerization inhibitor and the chelating agent. Alternatively, the composition according to the present invention preferably contains, in addition to the components (A) to (E), the curing accelerator, the inorganic filler, the polymerization inhibitor and the chelating agent. The composition according to the present invention is more preferably substantially composed of the components (A) to (E), the curing accelerator, the inorganic filler, the polymerization inhibitor and the chelating agent. The composition according to the present invention is particularly preferably composed only of the components (A) to (E), the curing accelerator, the inorganic filler, the polymerization inhibitor and the chelating agent.

In the present description, "the composition is substantially composed of X₁, X₂, X₃, ··· Xₘ" means that a total content of X₁, X₂, X₃, ··· Xₘ in the composition exceeds 95 mass% and preferably exceeds 99 mass% (upper limit: 100 mass%) .

The present invention can be used for the fitting or pasting of adherends (for example, electromagnetic steel plates or Welch plugs) that are formed of a metal (for example, SPCC (steel plate cold commercial) or copper). In addition, there are cases where an adherend is not suitable for anaerobic curability depending on the kind of metal. At that time, anaerobic curability can be improved by applying a solvent containing a metal complex such as copper or iron to one adherend as a primer and using another adherend with the composition according to the present invention in combination. As the use where the composition according to the present invention is used, it can be used for the screwing of spark plugs, the manufacturing of stacked steel plates, stacked molds and the like for rotors for rotating electric machines or solenoids. That is, in one embodiment of the present invention, the anaerobically curable composition according to the present invention is used in assembly of a stacked steel plate.

Anaerobic curing is a curing form that is performed at room temperature (20°C to 35°C); however, in the present invention, heating (after-baking) is performed during anaerobic curing or after anaerobic curing, whereby shear adhesive strength or peeling adhesive strength can be further improved. For example, in a case where anaerobic curing is performed at room temperature (20°C to 35°C), a curing time is 5 to 30 hours. A heat source at the time of performing the heating is not particularly limited, and examples thereof may include a hot air drying oven, a belt conveyor-type IR oven and the like. A temperature and a time at the time of heating need to conditions where sufficient curing is possible, and it is appropriate to perform heating, for example, at a temperature of 40°C to 300°C, preferably 60°C to 250°C, for example, for 10 seconds to 3 hours, preferably 20 seconds to 60 minutes. In the case of performing curing acceleration by heating, the heating is preferably performed at the same time as anaerobic curing or after anaerobic curing. That is, the present invention also provides a method for curing the anaerobically curable composition according to the present invention in which curing acceleration by heating is performed at the same time as the anaerobic curing or after the anaerobic curing of the anaerobically curable composition according to the present invention.

### Examples

Next, the present invention will be described in more detail using examples, but the present invention is not limited only to these examples. (Hereinafter, an anaerobically curable composition will be simply referred to as a composition.)

### [Examples 1 to 9 and Comparative Examples 1 to 3]

The following components were provided to prepare compositions.

### Component (A): (Meth)acryloyl compound

· Urethane-modified methacrylate oligomer having two functional groups and a weight-average molecular weight (Mw) of 13500 synthesized from a methacrylate having polyether polyol, diisocyanate and a hydroxyl group (ethylene glycol monomethacrylate having a methacrylate bonded to one of ethylene glycols) (hereinafter, also referred to as Synthesized Product 1)
· Urethane-modified acrylate oligomer having two functional groups and a weight-average molecular weight (Mw) of 38000 (SHIKOH^{™} UV-3700 manufactured by Mitsubishi Chemical Corporation)
· Alicyclic urethane-based acrylate oligomer (ART RESIN UN-004RU manufactured by Negami Chemical Industrial Co., Ltd.)
· UV-curable vinyl ester resin (EPICLON UE-8071-60BH manufactured by DIC Corporation)
. Tricyclodecanedimethanol dimethacrylate (NK ESTER DCP manufactured by Shin-Nakamura Chemical Co., Ltd.) (difunctional monomer)
· 2-Hydroxyethyl methacrylate (ACRYLIC ESTER HO manufactured by Mitsubishi Chemical Corporation) (monofunctional monomer)
. Isobornyl methacrylate (LIGHT ESTER IB-X manufactured by Kyoeisha Chemical Co., Ltd.) (monofunctional monomer)
· 2-Hydroxy-3-phenoxypropyl acrylate (EPOXY ESTER M-600A manufactured by Kyoeisha Chemical Co., Ltd.) (monofunctional monomer)
· Dipentaerythritol hexaacrylate (KAYARAD DPHA manufactured by Nippon Kayaku Co., Ltd.) (polyfunctional monomer)

### Component (B): Hydroperoxide

- Cumene hydroperoxide (PERCUMYL H-80 manufactured by NOF Corporation)

### Component (C): Saccharin

- Saccharin (reagent)

### Component (D): Sodium salt, potassium salt or calcium salt of saccharin

- o-Sulfobenzimide sodium salt dihydrate (reagent) (used as a master in which o-sulfobenzimide sodium salt dihydrate was dissolved in a concentration of 0.6 mass% with ACRYLIC ESTER HO)

### Curing accelerator

- Benzothiazole (reagent)
- 1-Dodecanethiol (reagent)
- Pure water

### Component (E): Adhesion imparting agent

- 2-Hydroxyethyl methacrylate acid phosphate (JPA-514 manufactured by Johoku Chemical Co., Ltd.)
- 3-Acryloxypropyltrimethoxysilane (KBM-5103 manufactured by Shin-Etsu Chemical Co., Ltd.)
- 3-Methacryloxypropyltrimethoxysilane (KBM-503 manufactured by Shin-Etsu Chemical Co., Ltd.)

### Stabilizer

· 2,6-Di-t-butyl-4-methylphenol (BHT) (reagent)
· Ethylenediamine-N,N,N',N'-tetraacetic acid tetrasodium salt tetrahydrate (solid at 25°C) (4NA(EDTA·4Na)) manufactured by Dojindo Molecular Technologies, Inc.)
· Ethylenediamine-N,N,N',N'-tetraacetic acid disodium salt dihydrate (solid at 25°C) (2NA(EDTA·2Na)) manufactured by Dojindo Molecular Technologies, Inc.)

### Filler

- Fumed silica surface-treated with polydimethylsiloxane (BET specific surface area: 200 m²/g) (CAB-O-SIL TS720 manufactured by Cabot Corporation)

Beforehand, as the component (D), o-sulfobenzimide sodium salt dihydrate was dissolved in a solid content of 0.6 mass% with ACRYLIC ESTER HO and used to prepare a component (D) master. Next, the component (A), the component (E) and the stabilizer were weighed, put into a stirring pot and stirred for 60 minutes, then, the component (B), the component (C), the master and the curing accelerator were weighed, put into the stirring pot and further stirred for 60 minutes. Finally, for compositions to which the filler was to be added, the filler was weighed, put into the stirring pot and further stirred for 30 minutes. Detailed preparation amounts follow Table 1, and numerical values are all shown in the unit of 'parts by mass'.

**[Table 1]**

| Component | Raw material | Example 1 | Example 2 | Example 3 | Example 4 | Example 5 | Example 6 |
|---|---|---|---|---|---|---|---|
| Component (A) | Synthesized product 1 | 36 | 23 | 32 | 30 | 23 | 23 |
| | UV-3700B | | 15 | | | | |
| | UN-004RU | | | | | | |
| | UE-8071-60BH | 20 | 20 | 20 | 20 | 20 | 20 |
| | DCP | | | | | | |
| | HO | 36 | 36 | 36 | 36 | 36 | 36 |
| | IB-X | 19 | 12 | 16 | 15 | 12 | 12 |
| | M-600A | 5 | 5 | 5 | 5 | 5 | 5 |
| | DPHA | | | | | | |
| | Component (D) master (HO) | 4 | 4 | 4 | 4 | 4 | 4 |
| Component (B) | H-80 | 1 | 1 | 1 | 1 | 1 | 1 |
| Component (C) | Saccharin | 1.5 | 1.5 | 1.5 | 1.5 | 1.5 | 1.5 |
| Component (D) | Component (0) master (solid content) | 0.024 | 0.024 | 0.024 | 0.024 | 0.024 | 0.024 |
| Curing accelerator | Benzothiazole | 0.5 | 0.5 | 0.5 | 0.5 | 0.5 | 0.5 |
| | 1-Dodecanethiol | 0.3 | 0.3 | 0.3 | 0.3 | 0.3 | 0.3 |
| | Pure water | | | | | | |
| Component (E) | JPA-514 | 0.2 | 0.2 | 0.2 | 0.2 | 0.2 | 0.2 |
| | KBM-5103 | | | 0.5 | | 0.5 | |
| | KBM-503 | | | | | | 0.5 |
| Stabilizer | BHT | 0.05 | 0.05 | 0.05 | 0.05 | 0.05 | 0.05 |
| | EDTA·4NA | 0.05 | 0.05 | 0.05 | 0.05 | 0.05 | 0.05 |
| | EDTA·2NA | 0.05 | 0.05 | 0.05 | 0.05 | 0.05 | 0.05 |
| Filler | TS720 | | | | | | |
| Total | | 123.67 | 118.67 | 117.17 | 113.67 | 104.17 | 104.17 |
| Total of component (A) | | 120 | 115 | 113 | 110 | 100 | 100 |

| Component | Raw material | Example 7 | Example 8 | Example 9 | Comparative Example 1 | Comparative Example 2 | Comparative Example 3 |
|---|---|---|---|---|---|---|---|
| Component (A) | Synthesized product 1 | 23 | 23 | 23 | | 28 | |
| | UV-3700B | | | | | | |
| | UN-004RU | | | | | | 30 |
| | UE-8071-60BH | 20 | 20 | 20 | 75 | 20 | |
| | DCP | | | | | | 35 |
| | HO | 36 | 36 | 36 | 10 | | 20 |
| | IB-X | 12 | 12 | 12 | 15 | 47 | 10 |
| | M-600A | 5 | 5 | 5 | | 5 | |
| | DPHA | | | | | | 5 |
| | Component (0) master (HO) | 4 | 4 | 4 | | | |
| Component (B) | H-80 | 1 | 1 | 1 | 1 | 1 | 1 |
| Component (C) | Saccharin | 1.5 | 1.5 | 1.5 | 1.5 | 1.5 | 1.5 |
| Component (D) | Component (0) master (solid content) | 0.024 | 0.024 | 0.024 | | | |
| Curing accelerator | Benzothiazole | 0.5 | 0.5 | 0.5 | 0.5 | 0.5 | 0.5 |
| | 1-Dodecanethiol | 0.3 | 0.3 | 0.3 | 0.3 | 0.3 | 0.2 |
| | Pure water | 0.5 | | | | | 0.2 |
| Component (E) | JPA-514 | 0.2 | 0.2 | 0.2 | 0.3 | 0.2 | 0.2 |
| | KBM-5103 | | | | | | |
| | KBM-503 | | | | | | |
| Stabilizer | BHT | 0.05 | 0.05 | 0.05 | 0.05 | 0.05 | 0.05 |
| | EDTA·4NA | 0.05 | 0.05 | 0.05 | 0.05 | 0.05 | 0.05 |
| | EDTA·2NA | 0.05 | 0.05 | 0.05 | 0.05 | 0.05 | 0.05 |
| Filler | TS720 | | | 5 | | | 3 |
| Total | | 104.17 | 103.67 | 108.67 | 103.75 | 103.65 | 106.75 |
| Total | of component (A) | 100 | 100 | 100 | 100 | 100 | 100 |

For Examples 1 to 9 and Comparative Examples 1 to 3, shear adhesive strength ("shear adhesive strength" in Table 2 below) measurement and T-type peeling adhesive strength ("peeling adhesive strength" in Table 2 below) measurement were performed according to the following methods. The results are summarized in Table 2. Here, as shown in Table 2, the measurements were performed at 25°C for 24 hours, 80°C for one hour and 200°C for one hour as "condition for being left." In addition, a primer was used according to "condition for being left." In a case where "use" is shown in the "use of primer" column, a composition composed of 50 mass% of a mineral oil (G6339F manufactured by Nihon Kohsakuyu Co., Ltd.) and ThreeBond 1390R (manufactured by ThreeBond Co., Ltd.) was used as the primer, and, in the case of "not use," the primer was not used.

### [Shear adhesive strength measurement]

A test piece was fabricated using two electromagnetic steel plates that were 25 mm in width, 100 mm in length and 0.3 mm in thickness (35JN300 manufactured by JFE Steel Corporation). In the case of using the primer according to Table 2, 0.1 g of the primer was applied to one electromagnetic steel plate, and, in the case of not use, the primer was not used. 0.1 g of each of the compositions of the Examples and the Comparative Examples was applied to the other electromagnetic steel plate and spread with a polytetrafluoroethylene rod. The electromagnetic steel plates were overlapped across an area that was 25 mm in width and 10 mm in length, and a 100 g weight was placed on the pasted surfaces from above. The composition was cured by being left to stand under each condition for being left shown in Table 2, thereby fabricating a test piece. The composition that overflowed from the pasted surfaces was wiped away. Once the test piece reached room temperature (25°C), both ends of the test piece were fixed with the chucks of a universal tensile tester, the test piece was pulled at a tensile rate of 50 mm/min, and a calculation result from the maximum adhesive strength was regarded as "shear adhesive strength (MPa)." The measurement was performed according to JIS K6850 (1999). Measurement results expressed as "material failure" in Table 2 indicate shear adhesive strength in a state where the adherend was partially or fully failed, and, in a case where material failure did not occur, "-" is entered. The shear adhesive strength is 5.0 MPa or higher, preferably 12.0 MPa or higher and particularly preferably 13.0 MPa or higher under the condition for being left at 25°C for 24 hours. The shear adhesive strength is 5.0 MPa or higher, preferably 13.0 MPa or higher and particularly preferably 14.0 MPa or higher under the condition for being left at 80°C for one hour. The shear adhesive strength is 10.0 MPa or higher, preferably 13.0 MPa or higher and particularly preferably 14.0 MPa or higher in the case of the condition for being left at 200°C for one hour.

### [T-type peeling adhesive strength measurement]

A test piece was fabricated using two electromagnetic steel plates that were 25 mm in width, 100 mm in length and 0.3 mm in thickness (35JN300 manufactured by JFE Steel Corporation). In the present test, the electromagnetic steel plates were used in a state of being folded at 90° at a length position of 70 mm, and an adhesive surface was 25 mm in width and 70 mm in length. In the case of using the primer according to Table 2, 0.3 g of the primer was applied to the adhesive surface of one electromagnetic steel plate, and, in the case of not use, nothing was performed. 0.5 g of each of the compositions of the Examples and the Comparative Examples was applied to the adhesive surface of the other electromagnetic steel plate and spread with a polytetrafluoroethylene rod. The adhesive surfaces were overlapped, and a 500 g weight was placed on the pasted surfaces from above. The composition was cured by being left to stand under each condition for being left shown in Table 2, thereby fabricating a test piece. The composition that overflowed from the pasted surfaces was wiped away. Once the test piece reached room temperature (25°C), both ends of the test piece were fixed with the chucks of a universal tensile tester, the test piece was pulled at a tensile rate of 50 mm/min, and a calculation result from the maximum adhesive strength was regarded as "peeling adhesive strength (kN/m)." The measurement was performed according to JIS K6854-3 (1999). In a case where the peeling adhesive strength failed to reach the measurement limit value (the adhesive surfaces were in a non-adhesive state), "ND" is entered. The peeling adhesive strength is preferably 0.5 kN/m or higher under the condition for being left at 25°C for 24 hours, 0.1 kN/m or higher under the condition for being left at 80°C for one hour, and 0.5 kN/m or higher in the case of the condition for being left at 200°C for one hour.

**[Table 2]**

| Test item | Condition for being left | Use of primer | Example 1 | Example 2 | Example 3 | Example 4 | Example 5 | Example 6 |
|---|---|---|---|---|---|---|---|---|
| Shear adhesive strength | 25°C × 24 hours | Use | 13.1 | 14.2 | 14.1 | 14.1 | 14.1 | 13.6 |
| | | | Material failure | Material failure | Material failure | Material failure | Material failure | Material failure |
| | 80°C × 1 hour | Not use | 14.3 | 14.9 | 14.2 | 14.2 | 14.3 | 14.0 |
| | | | Material failure | Material failure | Material failure | Material failure | Material failure | Material failure |
| | 200°C × 1 hour | Not use | 15.7 | 15.4 | 14.0 | 14.1 | 14.0 | 14.3 |
| | | | Material failure | Material failure | Material failure | Material failure | Material failure | Material failure |
| Peeling adhesive strength | 25°C × 24 hours | Use | 0.67 | 0.56 | 0.63 | 0.87 | 1.56 | 0.98 |
| | 80°C × 1 hour | Not use | 0.13 | 0.13 | 0.13 | 0.65 | 1.65 | 1.08 |
| | 200°C × 1 hour | Not use | 0.59 | 0.69 | 1.52 | 1.15 | 2.15 | 1.18 |

| Test item | Condition for being left | Use of primer | Example 7 | Example 8 | Example 9 | Comparative Example 1 | Comparative Example 2 | Comparative Example 3 |
|---|---|---|---|---|---|---|---|---|
| Shear adhesive strength | 25°C × 24 hours | Use | 14.0 | 13.8 | 13.5 | 4.3 | 4.2 | 11.0 |
| | | | Material failure | Material failure | Material failure | - | - | - |
| | 80°C × 1 hour | Not use | 14.2 | 14.2 | 14.0 | 5.8 | 4.3 | 12.9 |
| | | | Material failure | Material failure | Material failure | - | - | - |
| | 200°C × 1 hour | Not use | 14.3 | 15.2 | 14.1 | 5.8 | 10.1 | 11.8 |
| | | | Material failure | Material failure | Material failure | - | - | - |
| Peeling adhesive | 25°C × 24 hours | Use | 0.89 | 0.78 | 0.68 | ND | ND | ND |
| strength | 80°C × 1 hour | Not use | 0.97 | 0.11 | 0.45 | ND | ND | ND |
| | 200°C × 1 hour | Not use | 1.15 | 0.94 | 0.89 | 0.10 | 0.31 | 0.13 |

When the Examples and the Comparative Examples are compared with each other regarding the shear adhesive strength, it is noted that, when the compositions were left to stand at 25°C for 24 hours, in the Examples, the adhesive strength was 13 mPa or higher and material failure also occurred. Such a tendency was also the same when the compositions were left to stand at 80°C for one hour and at 200°C for one hour. When the Examples and the Comparative Examples are compared with each other regarding the peeling adhesive strength, it is noted that, in the Comparative Examples, the adhesive surfaces were in a non-adhesive state when the compositions were left to stand at 25°C for 24 hours and at 80°C for one hour, and the adhesive strength were higher in the Examples even when the compositions were left to stand at 200°C for one hour. A clear reason therefor has not yet been found, but it is presumed that the combined use of the component (C) and the component (D) would cause difference in the adhesive strength.

### INDUSTRIAL APPLICABILITY

The present invention relates to an anaerobically curable composition having high adhesive strength in a shear direction and in a peel direction, and, in a case where the anaerobically curable composition is used in assembly of a stacked steel plate, durability of the stacked steel plate can be improved. Furthermore, the anaerobically curable composition simplifies a method for assembling a stacked steel plate and copes with a variety of curing methods. When the durability of a stacked steel plate improves, contribution is made to high performance and reliability enhancement of rotors or stators of motors, and the anaerobically curable composition is applicable in a wide range of fields, which makes the present invention industrially available.

The present application is based on Japanese patent application No. 2021-178540 filed on November 1, 2021, the disclosed content of which is incorporated by reference in its entirety.

## Claims

1. An anaerobically curable composition comprising the following components (A) to (D):
component (A): (meth)acryloyl compound;
component (B): hydroperoxide;
component (C): saccharin;
component (D): sodium salt, potassium salt or calcium salt of saccharin.

2. The anaerobically curable composition according to claim 1, further comprising an adhesion imparting agent as a component (E), said component (E) comprising a compound having an acryloyl group and a hydrolysable silyl group in its molecule (excluding the component (A)).

3. The anaerobically curable composition according to claim 2, comprising a (meth)acryloyl monomer having a phosphoric acid ester skeleton (excluding the component (A)) as the component (E).

4. The anaerobically curable composition according to claim 1 or 2, comprising 10 to 50 mass% of a monofunctional (meth)acryloyl compound having a hydroxyl group in its molecule with respect to a total of the component (A).

5. The anaerobically curable composition according to claim 1 or 2, comprising an epoxy-modified (meth) acrylate oligomer or a (meth)acrylate oligomer having a bisphenol skeleton and a urethane-modified (meth)acrylate oligomer as the component (A).

6. The anaerobically curable composition according to claim 1 or 2 that is used in assembly of a stacked steel plate.

7. A method for curing the anaerobically curable composition according to claim 1 or 2, comprising performing curing acceleration by heating at the same time as anaerobic curing or after anaerobic curing.
